# EUROPEAN PATENT APPLICATION

(11) **EP 4 647 753 A1**
(43) Date of publication of application: **12.11.2025**
(21) Application number: 25174645.9
(22) Date of filing: 06.05.2025
(51) Int. Cl.: G01N 29/04, G01N 29/22, G01N 29/24, G01N 29/44

(54) **METHOD FOR INSPECTING A POWERPLANT COMPONENT USING A SELF-SUPERVISED MACHINE LEARNING**

(30) Priority: 06.05.2024 US 202418656184
(71) Applicant: RTX Corporation, Farmington, CT 06032 (US)
(72) Inventor: Hartmann, William L., Chicago, IL 60657 (US); Coleman, Ronald B., Arlington, MA 02474 (US)
(74) Representative: Dehns

(57) **Abstract**

A method of inspecting a component (22) is provided that includes: using a transducer (32) to transmit a first signal into a component (22) comprising a solid metallic material; using the transducer (32) to sense the component (22) for a second signal produced as a result of the first signal being transmitted into the component (22), and produce a response signal representative of the second signal; and processing the response signal to determine a presence or an absence of a defect in the solid metallic material of the component (22), the processing using a controller (48) configured with a self-supervised machine learning technique that is trained to be invariant to a component variability portion of the response signal.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, a method of inspecting a component is provided that includes: using a transducer to transmit a first signal into a component comprising a solid metallic material; using the transducer to sense the component for a second signal produced as a result of the first signal being transmitted into the component, and produce a response signal representative of the second signal; and processing the response signal to determine a presence or an absence of a defect in the solid metallic material of the component, the processing using a controller configured with a self-supervised machine learning technique that is trained to be invariant to a component variability portion of the response signal.

In the aspect described above, the self-supervised machine learning technique may be trained with a pretext task.

In any of the aspects or embodiments described above, the pretext task may be an augmentation invariance pretext that is used to train the self-supervised machine learning technique based on an augmented response signal.

In any of the aspects or embodiments described above, the augmented response signal may be based on empirical data.

In any of the aspects or embodiments described above, the component may be a rotor disk for a gas turbine engine, and the empirical data may be collected from a plurality of control rotor disks free of defects.

In any of the aspects or embodiments described above, the augmentation invariance pretext training of the self-supervised machine learning technique may include determining a contrastive loss between a processed response signal and a processed augmented response signal.

In any of the aspects or embodiments described above, the processed response signal may be processed using a first autoencoder, and the processed augmented response signal may be processed using a second autoencoder.

In any of the aspects or embodiments described above, the self-supervised machine learning technique may be trained with an augmentation invariance pretext task and a masked reconstruction pretext.

In any of the aspects or embodiments described above, the training of the self-supervised machine learning technique using the masked reconstruction pretext may include determining a reconstructive loss.

In any of the aspects or embodiments described above, the step of processing the response signal to determine the presence or the absence of the defect in the solid metallic material of the component may include processing an entirety of the response signal produced by the transducer.

According to an aspect of the present invention, a method of inspecting a rotor disk for a defect is provided that includes: providing a controller that is configured with stored instructions that cause the controller to perform a self-supervised machine learning technique that includes a trained masked reconstruction pretext; using a transducer to transmit a first signal into a rotor disk of a gas turbine engine, the rotor disk comprising a solid metallic material; using the transducer to sense the rotor disk for a second signal produced as a result of the first signal being transmitted into the component, and produce a transducer response signal representative of the second signal; and processing the transducer response signal, including masking a portion of the transducer response signal and using the trained masked reconstruction pretext to determine a presence or an absence of a defect in the solid metallic material of the rotor disk.

In the aspect described above, the processing step may include using the trained masked reconstruction pretext to produce a reconstructed portion of the transducer response signal.

In any of the aspects or embodiments described above, the processing step may include evaluating the reconstructed portion relative to the transducer response signal to determine a reconstructive loss.

In any of the aspects or embodiments described above, the processing step may include evaluating the reconstructive loss to determine the presence or the absence of the defect in the solid metallic material of the rotor disk.

In any of the aspects or embodiments described above, the self-supervised machine learning technique may include a trained augmentation invariance pretext task.

According to an aspect of the present invention, a component inspection system is provided that includes a signal transmitter, a signal receiver, and a controller. The controller is in communication with the signal transmitter, the signal receiver, and a non-transitory memory storing instructions. The stored instructions when executed cause the controller to: control the signal transmitter to transmit a first ultrasonic signal into a component comprising a solid metallic material; control the signal receiver to sense the component for a second ultrasonic signal and produce a response signal representative of the second ultrasonic signal; and use the response signal and a self-supervised machine learning technique to determine a presence or an absence of a defect in the solid metallic material of the component.

In the aspect described above, the self-supervised machine learning technique may be trained to be invariant to a variability of the component.

In any of the aspects or embodiments described above, the self-supervised machine learning technique may be trained using an augmentation invariance pretext and an augmented response signal, wherein the augmented response signal is configured to mimic variability associated with a plurality of control rotor disks that are free of defects.

In any of the aspects or embodiments described above, the training of the self-supervised machine learning technique using the augmentation invariance pretext may include determining a contrastive loss between a processed response signal and a processed augmented response signal.

In any of the aspects or embodiments described above, the self-supervised machine learning technique may be trained using a masked reconstruction pretext, and the training of the self-supervised machine learning technique using the masked reconstruction pretext may include determining a reconstructive loss between the response signal and a reconstructed portion of the response signal.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic illustration of a system for inspecting a component of a powerplant.
FIG. 2 is a schematic illustrations of a portion of the inspection system with a component for inspection.
FIG. 3 diagrammatically illustrates a network portion including an example of a masked reconstruction pretext.
FIG. 4 diagrammatically illustrates a network portion including an example of an augmentation invariance pretext.

### DETAILED DESCRIPTION

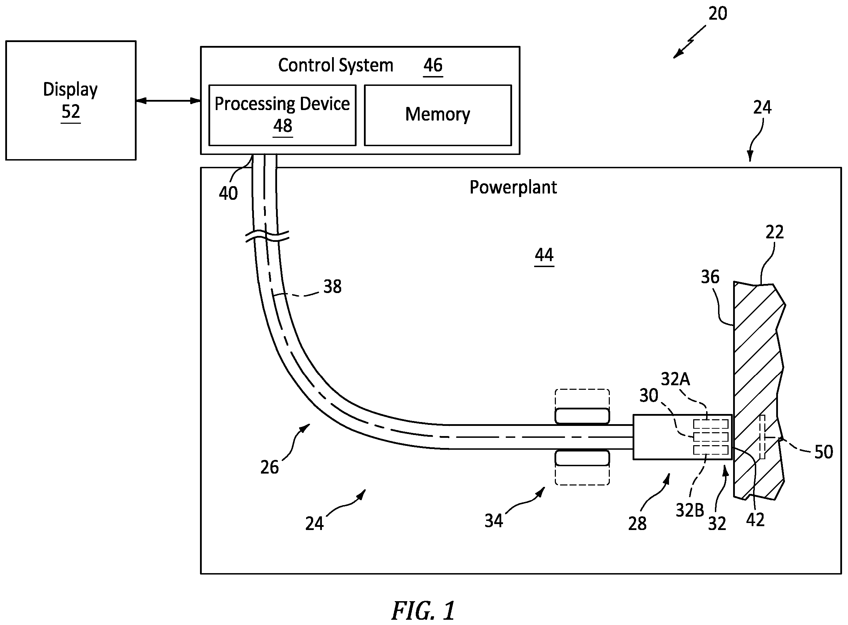

FIG. 1 illustrates an inspection system 20 for non-destructive inspecting a component 22 of a powerplant for an aircraft. The aircraft may be an airplane, a helicopter, a drone (e.g., an unmanned aerial vehicle (UAV)) or any other manned or unmanned aerial vehicle. The aircraft powerplant may be configured as, or otherwise included as part of, a propulsion system for the aircraft. The aircraft powerplant, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant may alternatively be configured as, or otherwise included as part of, a power generation system for the aircraft. The aircraft powerplant, for example, may be an auxiliary power unit (APU) or any other type of gas turbine engine configured to mechanically power operation of an electrical generator. The present disclosure, however, is not limited to such exemplary aircraft powerplants. Aspects of the present disclosure, for example, may also be used for inspecting components of other types of internal combustion engines and/or components of various other types of power units; e.g., an electric machine, a hybrid-electric power unit, etc.

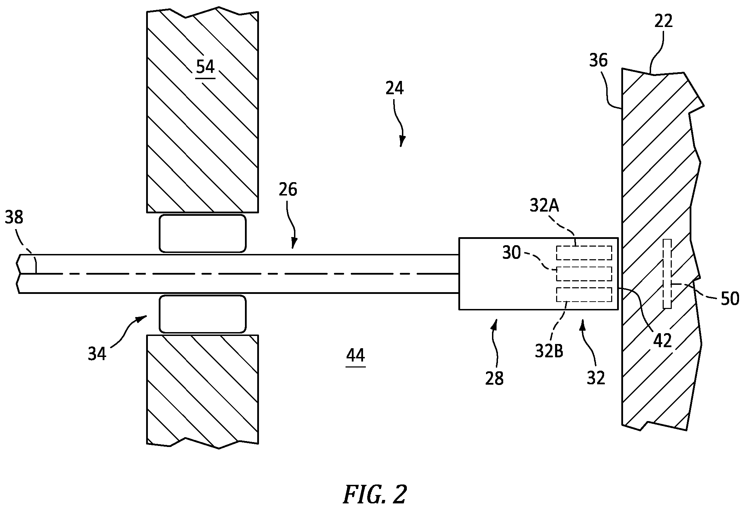

The inspection system 20 is configured to facilitate inspection of the powerplant component 22 while that powerplant component 22 remains installed within the aircraft powerplant and, for example, while the aircraft powerplant remains substantially or completely assembled. In FIG. 1, a powerplant component 22 is diagrammatically shown disposed within an interior 44 (e.g., an enclosed volume, an encased volume, etc. - see FIG. 2) of the aircraft powerplant. The inspection system 20 is also configured to facilitate inspection of the powerplant component 22 while the aircraft powerplant remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant when that aircraft powerplant is not installed with the aircraft (e.g., prior to installation with the aircraft or following removal from the aircraft) and/or when the aircraft powerplant is partially disassembled into one or more sub-assemblies.

The powerplant component 22 may be any inspectable (e.g., metal) component 22 within the aircraft powerplant. The present disclosure provides considerable utility, for example, in the inspection of rotor disks (e.g., a turbine rotor, a compressor rotor, or the like) within a gas turbine engine. To facilitate the description herein, the present disclosure will be described in terms of inspecting a component 22 in the form of a gas turbine engine rotor disk. To be clear, the present disclosure inspection system 20 is not limited to inspecting rotor disks.

Aspects of the present disclosure include an inspection system 20 that includes an electronic inspection scope 24 (e.g., a borescope) and a control system 46.

The inspection scope 24 may include a scope body 26 (e.g., a tether), a scope head 28, a scope positional sensor 30, and a transducer 32. In some embodiments, the inspection scope 24 may also include structure for positionally fixing at least a part of the inspection scope 24; e.g., an expandable mount 34. In FIG. 1, the expandable mount 34 is diagrammatically shown in a stowed arrangement by a solid line and in a deployed arrangement by the dashed line. In FIG. 2, the expandable mount 34 is diagrammatically shown engaged with a component structure 54 (e.g., a panel, wall, or the like) within the interior 44 of the aircraft powerplant. The expandable mount 34 may be configured to bias the scope head 28 against an exterior surface 36 of the component; e.g., rotor disk. The present disclosure does not require an expandable mount 34. In those embodiments that include an expandable mount 34, the present disclosure is not limited to any particular expandable mount 34 configuration.

The scope body 26 extends longitudinally along a longitudinal centerline 38 of the inspection scope 24 from a base end 40 of the inspection scope 24 to the scope head 28. The scope body 26 may be a flexible body. The scope body 26 may include one or more internal actuators for manipulating a configuration of the inspection scope 24 and its scope body 26 to aid in maneuvering the scope head 28 within the interior 44 of the aircraft powerplant to the powerplant component 22.

The scope head 28 embodiment shown in FIG. 1 may extend longitudinally along the centerline 38 at a scope distal end 42 of the inspection scope 24. The scope positional sensor 30 and the transducer 32 may be arranged with (e.g., mounted to and/or disposed in) the scope head 28.

The scope positional sensor 30 may be configured to aid in the maneuvering of the scope head 28 and, more particularly, maneuvering of the transducer 32 within the interior 44 of the aircraft powerplant towards the component 22 to be inspected; e.g., a rotor disk. The scope positional sensor 30, for example, may be configured as a camera, a proximity sensor, or the like, to provide information (e.g., in real time) regarding the location of the scope head 28 and/or the transducer 32 during the maneuvering of the scope head 28 within the interior 44 of the aircraft powerplant.

The transducer 32 is configured to function as both a signal transmitter and a signal receiver. In some embodiments, the transducer 32 includes at least one signal transmitter and at least one signal receiver, independent of one another. In some embodiments, the transducer 32 may be configured as a single device that functions as both a transmitter and a receiver. To facilitate the description herein, the transducer 32 will be described as having a signal transmitter that is independent of the signal receiver, but the present disclosure is not limited thereto. FIGS. 1 and 2 diagrammatically illustrate a signal transmitter 32A and a signal receiver 32B independent of one another.

The signal transmitter 32A is configured to emit an excitation signal into the component 22 to be inspected; e.g., a rotor disk. A non-limiting example of a signal transmitter 32A that may be used is piezoelectric ultrasonic actuator that produces an ultrasonic excitation signal that may be transmitted into the component 22; e.g., a rotor disk. The present disclosure is not limited to using a piezoelectric ultrasonic actuator, and in those embodiments that use a piezoelectric ultrasonic actuator, the present disclosure is not limited to any particular piezoelectric ultrasonic actuator configuration. Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 32A is in communication with the control system 46 for controlling the operation of the signal transmitter 32A.

The signal receiver 32B is configured to sense a signal within the component (e.g., a rotor disk) that is produced in response to the emitted excitation signal and to produce a transducer response signal representative of the sensed signal. As will be detailed in further detail herein, the signal receiver 32B is in communication with the control system 46; e.g. response signals produced by the signal receiver 32B are provided to control system 46 for processing.

The control system 46 includes a controller 48 that is in communication with other system components such as the signal transmitter 32A and the signal receiver 32B; e.g., to control the operation of the respective system component and/or to receive signals from and/or transmit signals to that system component to perform the functions described herein. The controller 48 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 20 to accomplish the same algorithmically and/or coordination of system components. The controller 48 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 48 may include, or may be in communication with, an input device (not shown) that enables a user to enter data and/or instructions, and may include, or be in communication with, an output device configured, for example to display information (e.g., a visual display 52 as shown in FIG. 1, or a printer, or the like), or to transfer data, etc. Communications between the controller 48 and other system components may be via a hardwire connection or via a wireless connection.

The control system 46 may include other components (e.g., signal processing hardware such as amplifiers, filters, analog to digital converters, or the like) in addition to or as an alternative to the components described herein.

Generally speaking, it is known to process transducer response signals to evaluate physical characteristics of a component 22 such as a rotor disk. Some existing approaches are limited to analyzing individual frequency peaks of transducer response signals to evaluate physical characteristics of a component 22. For example, individual signal peaks may be evaluated in terms of a univariate Gaussian distribution. When the signal peak differs significantly from an expected peak configuration (e.g., an outlier signal peak), the signal peak may be interpreted as being indicative of a defect or an undesirable anomaly (diagrammatically shown in FIGS. 1 and 2 as defect 50) present within the component 22. Hereinafter, the term "defect" as used herein shall refer to a physical anomaly present within the component that negatively affects the useful life or performance of the component. Non-limiting examples of defects that may be present within a rotor disk include cracking, corrosion, density variations, voids, microlaminations, poor sintering, and the like. Component 22 inspection using this approach is useful but often limited. For example, component 22 to component 22 variations in acceptable components 22 can produce signal peak variations that may be difficult to distinguish from signal peak variations attributable to defects or undesirable anomalies present within the component 22. The present disclosure provides a methodology that is understood to provide information beyond individual signal peak analysis and thereby provide improved information relating to the presence or absence of a defect or an undesirable anomaly within a component 22.

In addition to, or as an alternative to, utilizing signal peaks to provide improved information relating to the presence or absence of a defect or an undesirable anomaly within a component, embodiments of the present disclosure further evaluate transducer response signal frequency peaks collectively (as opposed to evaluating only an individual signal peak) to provide improved information relating to the presence or absence of a defect or an undesirable anomaly within a component.

Embodiments of the present disclosure utilize a self-supervised learning (SSL) approach within a machine learning model to learn a low-dimensional representation of the response signals that is not affected by normal component variability; e.g., component variability that is not attributable to defects. This variability may be referred to as "component-to-component variability". Self-supervised learning is a machine learning technique that uses unsupervised learning for tasks that conventionally require supervised learning. Rather than relying on labeled datasets for supervisory signals, self-supervised models generate implicit labels from unstructured data. The response signals produced by the signal receiver 32B are used as the input to a neural network of the machine learning model that contains an autoencoder portion. The autoencoder portion includes a bottleneck layer disposed between an encoder layer and decoder layer. The dimension of the bottleneck layer is significantly smaller than the dimension of the encoder layer (that accepts the response signal input) or the dimension of the decoder layer. The bottleneck layer operates to capture essential features or patterns within the input data (transformed within the encoder layer from the input response signals input) and to discard redundant data or data deemed to be inconsequential. The decoder receives the compressed data from the bottleneck layer and reconstructs the data in a form having the same dimensionality as the input data; i.e., the response signals.

The description herein regarding the machine learning model and its various different portions (e.g., self-supervised learning aspects, pretext tasks, autoencoders, and the like) may be configured as executable instructions stored within a memory device within or in communication with the control system 46.

Present disclosure embodiments utilizing a self-supervised learning approach may use one or more pretext tasks in the learning phase of the process. Two non-limiting examples of pretext tasks that may be used are a masked reconstruction pretext and an augmentation invariance pretext.

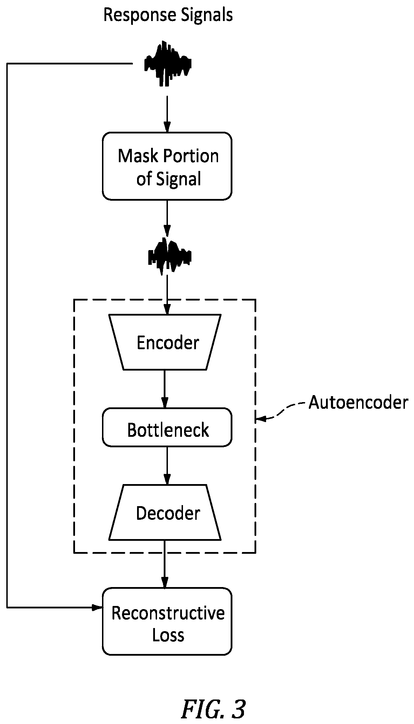

The masked reconstruction pretext involves masking portions of the input response signal. The SSL / ML model is tasked with reconstructing portions of the response signal that have been masked. In this manner, the SSL / ML model learns how to predict the full response signal when a portion of the response signal is absent. FIG. 3 diagrammatically illustrates a network portion that is presented with response signals without any masking and response signals with some portion masked. Through the learning phase, the network is tasked with generating a "substitute" signal response portion that is identical (or nearly identical) with the masked portion of the response signals. Hence, the network "learns" to produce / predict a reconstructed portion of the response signal for the portion of the response signal that was masked. Over the learning process, the network learns to produce / predict the reconstructed portion in agreement (typically to a high degree of agreement) with the masked portion of the response signal. During the learning process, the reconstructed portion may be evaluated relative to the input response signals (or at least a portion of it) in unmasked form to determine the degree of agreement associated with the reconstructed portion. The difference between the reconstructed portion and the unmasked response signals may be quantified in some manner as "reconstructive loss". The learning process may proceed until the reconstructive loss is within acceptable bounds. Once the network has achieved sufficient learning (i.e., acceptable reconstructive losses), the network may then be utilized to inspect a component 22 by identifying response signals that are potentially associated with a defect. For example, response signals may be evaluated using the learned network by masking suspect portions of the response signal. Under this aspect of present disclosure, the learned network can be used to produce a reconstructed portion of the response signals for the masked suspect portion. The reconstructed portion can be evaluated relative to the input response signals (including the suspect portion in unmasked form) to determine a degree of agreement associated with the reconstructed portion and the difference may be expressed in the form of a reconstructive loss value. The reconstructive loss value, in turn, may be used as an indicator of the presence of a defect within the component; e.g., a reconstructive loss value above a predetermined threshold may signal the presence of a defect. The above description is an example of how a masked reconstruction pretext may be used for component inspection / defect identification. The present disclosure is not limited to this specific example of how a masked reconstruction pretext may be used for component inspection / defect identification.

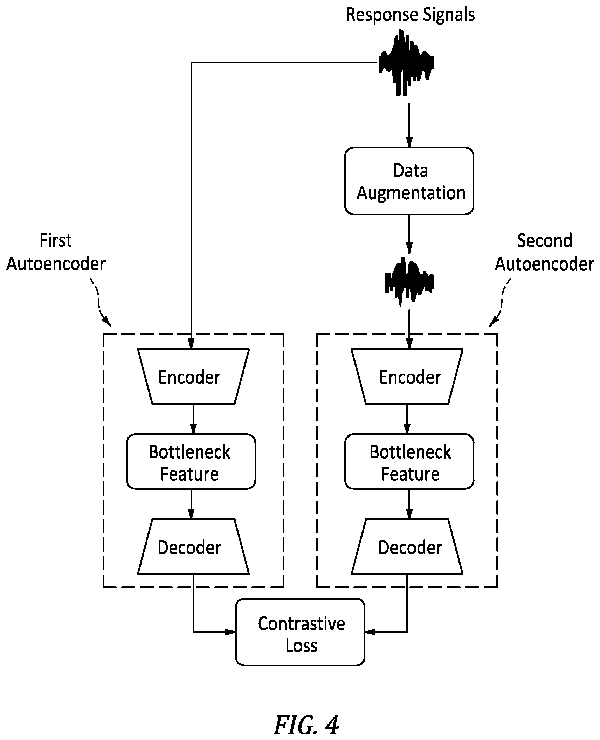

Within the augmentation invariance pretext (contrastive learning), the network is presented with both the original response signal and an augmented version of the response signal. The augmentations may be created to mimic component to component variability. For example, empirical data may be developed from defect free components (e.g., from a useful number of rotor disks known to be defect free) that establishes response signal portion attributable to component to component variability. The defect free components may be referred to as "control components". The augmentations may be based on the empirical data collected, for example, from a useful number of control components in the form of rotor disks known to be defect free (e.g., the same type of rotor disk to be inspected). The SSL / ML model is tasked with generating a representation that is identical (or nearly identical) for both the original and the augmented signal. This process explicitly forces the SSL / ML model to generate a representation that is invariant to augmentation; i.e., invariant to component to component variability. FIG. 4 diagrammatically illustrates a network portion that is presented with both original response signals and response signals that have been subjected to augmentation; e.g., augmentation that may be created to mimic component to component variability. Through the learning phase, the network is tasked with minimizing contrastive loss between the reconstructed original response signal and the reconstructed augmented signal response such that the two are identical or nearly identical. The network portion diagrammatically shown in FIG. 4 includes a first auto encoder that receives the original response signals and a second autoencoder that receives the response signals that have been subjected to augmentation. The reconstructed signals from the first and second autoencoders are evaluated to determine contrastive loss. The learning process may proceed until the contrastive loss is within acceptable bounds. Once the network has achieved sufficient learning (i.e., acceptable contrastive losses), the network may then be invariant to component to component variability within acceptable bounds and consequently be better suited to identifying response signals associated with a component defect.

The above-described machine learning techniques utilized within the present disclosure are understood to be advantageous for inspecting components such as gas turbine engine rotor disks for several reasons. For example, the present disclosure permits the full response signal spectrum to be used in the inspection as opposed to inspection techniques that are limited to using just a few frequency peaks. As another example, the initial training stage does not require any labeled data, but rather uses frequency responses from rotor disks regardless of whether or not the rotor disks contain defects. The data augmentation invariance pretext allows for the effective expansion of the training data. The learned representations in both pretexts will inherently separate frequency responses from disks with and without defects. Current state-of-the-art approaches of which we are aware represent response signals as a set of frequency peaks. Defects are then detected by examining the differences between individual frequency peaks. However, those differences may be due to defects or component to component variability and current approaches do not specifically model the differences in those types of variability. The present disclosure methodology, in contrast, provides a mechanism for modeling component to component variability and thereby facilitates distinguishing defects from component to component variability.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of inspecting a component (22), comprising:
using a transducer (32) to transmit a first signal into a component (22) comprising a solid metallic material;
using the transducer (32) to sense the component (22) for a second signal produced as a result of the first signal being transmitted into the component (22), and produce a response signal representative of the second signal; and
processing the response signal to determine a presence or an absence of a defect in the solid metallic material of the component (22), the processing using a controller (48) configured with a self-supervised machine learning technique that is trained to be invariant to a component variability portion of the response signal.

2. The method of claim 1, wherein the self-supervised machine learning technique is trained with a pretext task.

3. The method of claim 2, wherein the pretext task is an augmentation invariance pretext that is used to train the self-supervised machine learning technique based on an augmented response signal.

4. The method of claim 3, wherein the augmented response signal is based on empirical data.

5. The method of claim 4, wherein the component (22) is a rotor disk for a gas turbine engine, and the empirical data is collected from a plurality of control rotor disks free of defects.

6. The method of claim 3, 4 or 5, wherein the augmentation invariance pretext training of the self-supervised machine learning technique includes determining a contrastive loss between a processed said response signal and a processed said augmented response signal.

7. The method of any of claims 3 to 6, wherein the processed said response signal is processed using a first autoencoder, and said augmented response signal is processed using a second autoencoder.

8. The method of any preceding claim, wherein the self-supervised machine learning technique is trained with an augmentation invariance pretext task and a masked reconstruction pretext.

9. The method of claim 8, wherein the training of the self-supervised machine learning technique using the masked reconstruction pretext includes determining a reconstructive loss.

10. The method of any preceding claim, wherein the step of processing the response signal to determine the presence or the absence of the defect in the solid metallic material of the component (22) includes processing an entirety of the response signal produced by the transducer (32).

11. A component inspection system (20), comprising:
a signal transmitter (32A);
a signal receiver (32B); and
a controller (48) in communication with the signal transmitter (32A), the signal receiver (32B), and a non-transitory memory storing instructions, which instructions when executed cause the controller (48) to:
control the signal transmitter to transmit a first ultrasonic signal into a component (22) comprising a solid metallic material;
control the signal receiver to sense the component for a second ultrasonic signal and produce a response signal representative of the second ultrasonic signal;
use the response signal and a self-supervised machine learning technique to determine a presence or an absence of a defect in the solid metallic material of the component (22).

12. The system of claim 11, wherein the self-supervised machine learning technique is trained to be invariant to a variability of the component (22).

13. The system of claim 12, wherein the self-supervised machine learning technique is trained using an augmentation invariance pretext and an augmented response signal, wherein the augmented response signal is configured to mimic variability associated with a plurality of control rotor disks that are free of defects.

14. The method of claim 13, wherein the training of the self-supervised machine learning technique using the augmentation invariance pretext includes determining a contrastive loss between a processed said response signal and a processed said augmented response signal.

15. The method of any of claims 11 to 14, wherein the self-supervised machine learning technique is trained using a masked reconstruction pretext, and the training of the self-supervised machine learning technique using the masked reconstruction pretext includes determining a reconstructive loss between the response signal and a reconstructed portion of the response signal.
